# EUROPÄISCHE PATENTSCHRIFT

(11) **EP 1 643 208 B1**
(45) Veröffentlichungstag und Bekanntmachung des Hinweises auf die Patenterteilung: **30.08.2017**
(21) Anmeldenummer: 05015302.2
(22) Anmeldetag: 14.07.2005
(51) Int. Cl.: G01B 7/012

(54) **Taststift und Taststiftwechselhalterung für ein Koordinatenmessgerät**
Feeler head and changeable feeler head holder for a coordinates measuring apparatus
Palpeur et porte-palpeur changeable pour un appareil de mesure de coordonnées

(30) Priorität: 30.09.2004 DE 102004048095
(43) Veröffentlichungstag der Anmeldung: 05.04.2006
(73) Patentinhaber: Carl Zeiss Industrielle Messtechnik GmbH, 73447 Oberkochen (DE)
(72) Erfinder: Boucky, Otto, 89518 Heidenheim (DE); Ruck, Otto, 73479 Pfahlheim (DE)
(74) Vertreter: Henckell, Carsten

(56) Entgegenhaltungen:
- EP-A1- 0 404 275
- WO-A1-2004/070340
- DE-A1- 10 136 438
- DE-U1- 20 317 487
- FR-A1- 2 574 501
- JP-A- 2003 227 526
- US-A- 3 274 455
- US-A- 5 805 140
- US-A1- 2002 094 671
- US-A1- 2004 111 908
- US-B1- 6 177 729

## Beschreibung

Die Erfindung betrifft einen Taststift, der auswechselbar am Tastkopf eines Koordinatenmessgerätes befestigbar ist. Die Erfindung betrifft ferner eine zugehörige Taststiftwechselhalterung zur auswechselbaren Aufnahme eines solchen Taststiftes am Tastkopf eines Koordinatenmessgerätes.

Taststifte und zugehörige Taststiftwechselhalterungen der eingangs genannten Art sind bereits seit längerem bekannt. Die Taststifte müssen deshalb auswechselbar sein, damit im Messablauf unterschiedliche Taststiftkonfigurationen verwendet werden können. Eine horizontale Bohrung muss beispielsweise mit einem Taststift angetastet werden, der einen horizontalen Ausleger aufweist. Eine vertikale Bohrung mit einem Taststift, der vertikal ausgerichtet ist. Ein heute üblicher Taststift umfasst hierzu mehrere Lager, die zur Lagerung des Taststiftes auf dafür vorgesehenen Gegenlagern der Taststiftwechselhalterung des Tastkopfes vorgesehen sind. Üblicherweise werden hierzu drei Lager verwendet, um eine statisch eindeutig definierte Lagerung zu erhalten (siehe z.B. in DE 203 17 487 U1). Als Lager können beispielsweise Zylinder verwendet werden und als zugeordnete Gegenlager an der Taststiftwechselhalterung Paare von Kugeln, auf denen die Zylinder aufliegen. Natürlich gibt es hierbei vielfältige Variationen. Die Lager eines Taststiftes sind hierbei üblicherweise aus Hartmetall gefertigt. Außerdem weist der Taststift üblicherweise einen Spannadapter auf, der mit einer Spanneinrichtung der Taststiftwechselhalterung zusammenwirkt. Hierbei handelt es sich beispielsweise um einen Magneten, der von einer elektromagnetischen Spanneinrichtung in der Taststiftwechselhalterung angezogen werden kann. Gleichfalls kann es sich auch um einen Haken handeln der von einer als Greifer ausgebildeten Spanneinrichtung der Taststiftwechselhalterung gezogen wird oder um einen Saugnapf, wobei die Spanneinrichtung in der Taststiftwechseleinrichtung dann eine Einrichtung ist, die ein Vakuum zum Ansaugen des Saugnapfes erzeugt. Außerdem weisen heute übliche Taststifte Chips auf, die eine den Taststift eindeutig kennzeichnende digitale Kennung enthalten und vom Koordinatenmessgerät ausgelesen werden können. Hierzu ist der Chip mit Kontaktflächen leitend verbunden, die sich auf dem Taststiftteller befinden. Diese Kontaktflächen können von entsprechenden Pins, die sich an der Taststiftwechselhalterung befinden, abgegriffen werden.

Die Taststiftwechselhalterung wiederum, die der auswechselbaren Befestigung der eben beschriebenen Taststifte dient, befindet sich am Ende des Tastkopfes. Als Tastköpfe kommen hierbei grundsätzlich zwei verschiedene Arten in Betracht, nämlich einmal sogenannte messende Tastköpfe, bei denen der Taststift über eine im Tastkopf befindliche Mechanik gegenüber der Tastkopfbefestigung in den drei Koordinaten ausgelenkt werden kann, wobei diese Auslenkung gemessen wird und entsprechend mit den Maßstabswerten des Koordinatenmessgerätes verrechnet wird; zum anderen kann es sich auch um einen sogenannten schaltenden Tastkopf handeln, bei dem bei einer Berührung des Werkstückes mit dem Taststift ein Signal erzeugt wird, das zu einem Auslesen der Maßstabswerte des Koordinatenmessgerätes führt.

Wie oben bereits beschrieben, umfassen solche Taststiftwechselhalterungen üblicherweise Gegenlager, die mit den Lagern des Taststiftes zusammenwirken. Auch die Gegenlager sind üblicherweise aus Hartmetall gefertigt. Des weitem ist in einer solchen Taststiftwechselhalterund eine Spanneinrichtung vorgesehen, die mit einem Spannadapter des Taststiftes zusammenwirkt, um die Lager des Taststiftes gegen die Gegenlager der Taststiftwechselhalterung zu spannen, wie wir dies bereits oben ausgeführt haben. Des weiteren sind Pins vorgesehen, die mit einer Auswerteschaltung leitend verbunden sind. Die Pins berühren die bereits oben beschriebenen Kontakte des Taststiftes. Hierdurch kann die Auswerteschaltung die Identifikationsinformation vom Chip des Taststiftes auslesen und hierdurch eindeutig bestimmen, um welchen Taststift es sich hierbei handelt.

Des weiteren ist im Stand der Technik eine Taststiftwechselhalterung bekannt, bei der der Sitz des Taststiftes an der Taststiftwechselhalterung überprüft wird. Hierzu weist die Taststiftwechselhalterung als Gegenlager zur Lagerung eines Taststiftes drei Kugelpaare aus Hartmetall auf, wobei jedes dieser Kugelpaare als Gegenlager für einen aus Hartmetall hergestellten Zylinder, der als Lager des Taststiftes fungiert, dient. Die drei Kugelpaare sind über zwei Widerstände in der Weise leitend miteinander Verbunden, dass eine Kugel eines Kugelpaars über einen Widerstand mit einer Kugel eines anderen Kugelpaars verbunden ist und zwar so, dass bei einem Kugelpaar beide Kugeln über jeweils einen Widerstand mit der Kugel eines anderen Kugelpaars verbunden ist und bei den beiden restlichen Kugelpaaren jeweils nur eine Kugel mit einem Widerstand leitend verbunden ist. Der korrekte Sitz des Taststiftes kann nunmehr überprüft werden, indem an den beiden restlichen Kugeln der Kugelpaare, die mit keinem Widerstand verbunden sind, eine Spannung angelegt wird. Liegen alle drei Zylinder korrekt auf dem jeweiligen Kugelpaar auf, so wird die Lücke zwischen den Kugeln der Kugelpaare leitend überbrückt, so dass hierdurch ein Stromfluss über die nunmehr in Serie geschalteten Widerstände entsteht. Anhand dem Vorhandensein und der Größe des Stromflusses wird festgestellt, ob die Lager des Taststiftes korrekt auf den Gegenlagern der Taststiftwechselhalterung aufliegen.

Ausgehend hiervon liegt unserer Erfindung die Aufgabe zugrunde, den beschriebenen Taststift und die beschriebene Taststiftwechselhalterung weiter zu vereinfachen.

Die Aufgabe wird erfindungsgemäß durch einen Taststift gemäß Anspruch 1 und durch eine Taststiftwechselhalterung gemäß Anspruch 6 gelöst.

Der gemeinsame erfinderische Grundgedanke ist hierbei darin zu sehen, dass die auf dem Chip im Taststift enthaltene digitale Identifikationsinformation nicht mehr über separate Kontaktflächen ausgelesen werden muss sondern vielmehr die Lager des Taststiftes und die Gegenlager der Taststiftwechselhalterung als elektrische Kontakte genutzt werden. Dies ist nicht weiter schwierig, da die Lager heute gängiger Taststifte und die Gegenlager gängiger Taststiftwechseleinrichtungen ohnehin aus elektrisch leitendem Material gefertigt sind.

Hierbei sind in einem erfindungsgemäßen Taststift wenigstens zwei der Lager leitend mit dem Chip verbunden, so dass über diese beiden Lager eine elektrische Verbindung mit dem Chip herstellbar ist, um hierüber die digitale Identifizierungsinformation auszulesen.

In der Taststiftwechselhalterung genügt es grundsätzlich, wenn die Auswerteschaltung mit einem ersten und einem zweiten Gegenlager leitend verbunden ist, die mit den Lagern des Taststiftes in Kontakt kommen, die leitend mit dem Chip verbunden sind.

Sofern wenigstens ein erstes Lager des Taststiftes oder ein erstes Gegenlager der Taststiftwechselhalterung aus zwei separaten, elektrisch gegeneinander isolierten Bauteilen besteht (z.B. aus zwei Kugeln oder aus zwei Zylindern etc.), kann die eben beschriebene Anordnung noch durch Funktionalität zur Überprüfung des Sitzes des Taststiftes verbessert werden.

Dies wird zunächst für den Taststift beschrieben. Wenn eines dieser beiden elektrisch gegeneinander isolierten Bauteile leitend über den Chip mit einem zweiten Lager verbunden ist, und das andere dieser elektrisch gegeneinander isolierten Bauteile leitend oder über einen Widerstand mit einem dritten Lager verbunden ist, so führt dies dazu, dass bei Berührung eines zugehörigen, elektrisch leitenden Gegenlagers der Taststiftwechseleinrichtung mit beiden gegeneinander isolierten Bauteilen des ersten Lagers eine elektrische Überbrückung entsteht und somit zwischen dem zweiten und dem dritten Lager ein Strompfad entsteht, in dem sich der Chip befindet. Damit also die Identifizierungsinformation aus dem Chip ausgelesen werden kann, müssen nicht nur zwei der Lager des Taststiftes die Gegenlager der Taststiftwechselhalterung berühren, sondern alle drei Lager, sonst entsteht keine leitende Verbindung zwischen der Auswerteschaltung und dem Chip. Hierdurch kann auf sehr einfache Weise geprüft werden, ob der Taststift mit allen drei Lagern auf den zugeordneten Gegenlagern aufliegt.

Umgekehrt kann natürlich auch ein erstes Gegenlager der Taststiftwechselhalterung aus zwei separaten, elektrisch gegeneinander isolierten Bauteilen bestehen und eines dieser Bauteile leitend oder über einen Widerstand mit einem dritten Gegenlager verbunden sein, und das andere dieser Bauteile leitend mit der Auswerteschaltung verbunden sein. Bei Berührung eines zugehörigen, elektrisch leitenden Lagers eines Taststiftes mit beiden gegeneinander isolierten Bauteilen des ersten Gegenlagers entsteht hierbei eine elektrische Überbrückung und hierdurch zwischen dem dritten Gegenlager und der Auswerteschaltung eine leitende Verbindung. Damit hier die Identifizierungsinformation aus dem Chip ausgelesen werden kann, müssen auch hier nicht nur zwei der Lager des Taststiftes die Gegenlager der Taststiftwechselhalterung berühren, sondern alle drei Lager, sonst entsteht keine leitende Verbindung zwischen der Auswerteschaltung und dem Chip. Hierdurch kann gleichfalls auf einfache Weise geprüft werden, ob der Taststift mit allen drei Lagern auf den zugeordneten Gegenlagern aufliegt.

Soll durch die vorgehend beschriebenen Konfigurationen des Taststiftes oder der Taststiftwechselhalterung der korrekte Sitz des Taststiftes an der Taststiftwechselhalterung festgestellt werden, so genügt es, wenn die Auswerteschaltung überprüft, ob die digitale Identifizierungsinformation ausgelesen werden kann.

Es sei an dieser Stelle ausdrücklich erwähnt, dass die ideale Konfiguration drei Lager mit zugehörigen Gegenlagern umfasst, da hierdurch die Aufnahme-Position des Taststiftes statisch eindeutig bestimmt ist. Natürlich können alle beschriebenen Ausführungsformen auch für Taststifte oder Taststiftwechselhalterungen angewandt werden, die mehr oder weniger Lager / Gegenlager aufweisen.

Eine Besonderheit ergibt sich dann, wenn zusätzlich
- auch das zweite Lager und/oder das dritte Lager des Taststiftes jeweils aus zwei separaten, elektrisch gegeneinander isolierten Bauteilen bestehen oder
- das zweite Gegenlager und/oder das dritte Gegenlager der Taststiftwechselhalterung jeweils aus zwei separaten, elektrisch gegeneinander isolierten Bauteilen bestehen.

In diesem Fall ergibt sich eine besondere Konstellation, die für den ersten Fall dargestellt wird, dass das zweite Lager und/oder das dritte Lager des Taststiftes jeweils aus zwei separaten, elektrisch gegeneinander isolierten Bauteilen bestehen. In diesem Fall ist der Chip nur jeweils mit einem der beiden elektrisch gegeneinander isolierten Bauteile eines Lagers leitend verbunden. Es kommt damit bereits dann zur leitenden Verbindung zwischen Auswerteschaltung und Chip, wenn nur dieses eine Bauteil des Lagers auf dem Gegenlager aufliegt. Berührt hingegen das andere Bauteil des Lagers das Gegenlager nicht, so wird dies nicht festgestellt.

Um dieses Problem zu lösen wird deshalb
- das eine elektrisch isolierte Bauteil des dritten Lagers leitend oder über einen Widerstand mit einem elektrisch isolierten Bauteil des ersten Lagers verbunden, und das andere elektrisch isolierte Bauteil des dritten Lagers über einen Widerstand leitend mit dem zweiten Lager verbunden und/oder
- das eine elektrisch isolierte Bauteil des zweiten Lagers leitend über den Chip mit einem elektrisch isolierten Bauteil des ersten Lagers verbunden, und das andere elektrisch isolierte Bauteil des zweiten Lagers über einen Widerstand leitend mit dem dritten Lager verbunden.

Hierdurch ergeben sich bei Berührung der zugehörigen, elektrisch leitenden Gegenlager mit jeweils beiden gegeneinander isolierten Bauteilen des ersten Lagers und des zweiten Lagers und/oder des dritten Lagers elektrische Überbrückungen und somit zwischen dem zweiten und dem dritten Lager zwei parallele Strompfade, wobei sich im ersten Strompfad der Chip ggf. in Serie mit einem Widerstand befindet und sich im zweiten Strompfad der Widerstand befindet. Eine korrekte Lage des Taststiftes kann nunmehr beispielsweise überprüft werden, indem die Auswerteschaltung sowohl die Identifikationsinformation des Chips abfragt, wie auch den Gleichstromwiderstand überprüft, indem sie eine Strommessung durchführt. Der vorgegebene Stromfluss ergibt sich nur dann, wenn auch der Pfad über den Widerstand geschlossen ist. Aufgrund des relativ hohen Gleichstromwiderstandes des Chips ist eine Unterscheidung zwischen geschlossenem Strompfad über den parallel geschalteten Widerstand und geöffnetem Strompfad sehr einfach zu bestimmen.

Für den anderen Fall, dass das zweite Gegenlager und/oder das dritte Gegenlager der Taststiftwechselhalterung jeweils aus zwei separaten, elektrisch gegeneinander isolierten Bauteilen bestehen, ergibt sich eine analoge Situation. Das Problem kann hier wie folgt gelöst werden:
- das eine elektrisch isolierte Bauteil des dritten Gegenlagers ist leitend oder über einen Widerstand mit einem elektrisch isolierten Bauteil des ersten Gegenlagers verbunden, und das andere elektrisch isolierte Bauteil des dritten Gegenlagers ist über einen Widerstand leitend mit dem zweiten Gegenlager verbunden und/oder
- das eine elektrisch isolierte Bauteil des zweiten Gegenlagers ist leitend mit der Auswerteschaltung verbunden und das andere elektrisch isolierte Bauteil des zweiten Gegenlagers ist über einen Widerstand leitend mit dem dritten Gegenlager verbunden.

Bei Berührung der zugehörigen, elektrisch leitenden Lager des Taststiftes mit jeweils beiden gegeneinander isolierten Bauteilen des ersten Gegenlagers sowie des zweiten Gegenlagers und/oder des dritten Gegenlagers entstehen elektrische Überbrückungen und somit zwischen dem ersten und dem zweiten Gegenlager zwei parallele Strompfade, wobei sich im ersten Strompfad der Chip befindet und sich im zweiten Strompfad der Widerstand befindet. Völlig analog zum vorherigen Beispiel überprüft die Auswerteschaltung die Identifizierungsinformation und den Stromfluss.

Diese zuletzt beschriebene Ausführungsform ist ganz besonders vorteilhaft, weil hiermit einerseits sowohl die digitale Identifizierungsinformation aus dem Chip ausgelesen werden kann und andererseits die richtige Lage der Lager des Taststiftes auf den Gegenlagern der Taststiftwechselhalterung durch die Strommessung überprüft werden kann. Außerdem ist der Aufbau des Taststiftes in diesem Falle auf ein Minimum reduziert, da die Lager des Taststiftes einteilig ausgebildet sein können und andererseits die einzigen elektrischen Verbindungen die beiden Verbindungen zwischen dem Chip und den Lagern sind.

In dieser letzten Ausführungsvariante können die Lager des Taststiftes als Zylinder ausgebildet sein und die zugeordneten Gegenlager der Taststiftwechselhalterung als Paare von Kugeln.

Die vorgenannten Konfigurationen von Taststiften und Taststiftwechselhalterungen sind allesamt so ausgestaltet, dass diese grundsätzlich mit einer Auswerteschaltung betrieben werden können, mit der lediglich die Identifizierungsinformation aus dem Chip ausgelesen werden kann. Soll jedoch zusätzlich überprüft werden, dass ein korrekter Sitz der Lager des Taststiftes auf den Gegenlagern der Taststiftwechselhalterung vorliegt, sollte die Auswerteschaltung so konfiguriert sein, dass diese den korrekten Sitz des Taststiftes überprüft. Im Falle der einfacheren Schaltungen genügt hierzu, wenn die Auswerteschaltung überprüft, ob die Identifizierungsinformation aus dem Chip ausgelesen werden kann. Zumindest in den letztgenannten Fällen eines Taststiftes oder einer Taststiftwechselhalterung, in denen sich der Chip in einem parallelen Strompfad zu einem Widerstand befindet, sollte die Auswerteschaltung zu dieser Überprüfung entweder alternativ oder aber zusätzlich eine elektrische Größe, wie insbesondere den Strom oder die Spannung, messen und überprüfen, ob diese gemessene Größe mit einem Sollwert übereinstimmt.

Weiter Vorteile und Weiterbildungen ergeben sich aus der Figurenbeschreibung.

Hierin zeigen:
- Figur 1:: zeigt ein Koordinatenmessgerät,
- Figur 2:: zeigt rein schematisch einen Taststift 10, der an einer nur teilweise sichtbaren Tast-stiftwechselhalterung 43 aufgenommen ist in der Seitenansicht,
- Figur 3a:: zeigt die Taststiftwechselhalterung 43 gemäß Figur 2 von unten ohne den Taststift 10,
- Figur 3b:: zeigt den Taststift 10 gemäß Figur 2 von oben,
- Figur 4:: zeigt eine rein schematische Darstellung einer ersten Ausführungsvariante eines erfindungsgemäßen Taststiftes 10 und einer zugehörigen Taststiftwechselhalterung 43, mit der die digitale Indentifizierungsinformation eines Chips 24 ausgelesen werden kann,
- Figur 5:: zeigt eine Weiterbildung von Figur 4 mit der zusätzlich die Berührung aller drei Lager 16a, 16b, 16c des Taststiftes auf den Gegenlagern 14a,15a; 14b,15b; 14c,15c der Taststiftwechselhalterung überprüft werden kann,
- Figur 6:: zeigt eine rein schematische Darstellung einer zweiten Ausführungsvariante eines erfindungsgemäßen Taststiftes 10 und einer zugehörigen Taststiftwechselhalterung 43 mit der gegenüber Figur 5 zusätzlich der korrekte Sitz der Lager des Taststiftes auf den Gegenlagern überprüft werden kann,
- Figur 7:: zeigt eine rein schematische Darstellung einer weiteren Weiterbildung der Ausführungsvariante gemäß Figuren 4 und 5, mit der zusätzlich auch der korrekte Sitz der Lager des Taststiftes auf den Gegenlagern überprüft werden kann,
- Figur 8:: zeigt eine schematische Darstellung einer Weiterbildung der Ausführungsvariante gemäß Figur 7, bei der die Leitung 21b (hier mit 21b' und 21b" bezeichnet) zusätzlich einen Widerstand 44 enthält
- Figur 9:: zeigt eine dritte Ausführungsvariante, mit der ebenfalls zusätzlich auch der korrekte Sitz der Lager des Taststiftes auf den Gegenlagern überprüft werden kann

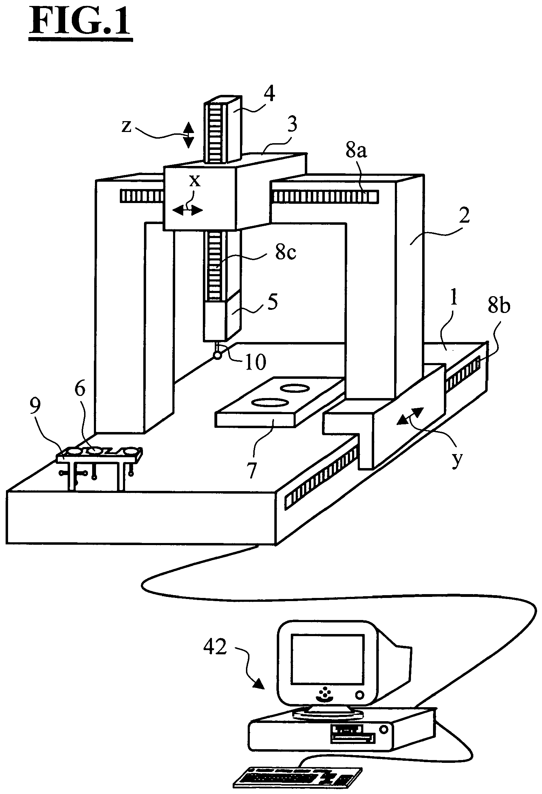

Figur 1 zeigt rein beispielhaft ein Koordinatenmessgerät. Hierbei ist auf dem Messtisch 1 ein Portal 2 in der mit y bezeichneten Richtung verfahrbar gelagert, wobei hierbei ein Maßstab 8b abgetastet wird, um die momentane Position in y-Richtung zu bestimmen. Entlang der horizontalen, den Messtisch 1 überspannenden Traverse des Portals 2 ist in der mit dem Pfeil x bezeichneten Richtung ein X-Schlitten 3 beweglich gelagert, dessen jeweilige Position durch Abtasten eines Maßstabes 8a bestimmt wird. In der mit dem Pfeil z bezeichneten Richtung wiederum ist eine Pinole 4 beweglich gelagert, deren Position in z-Richtung durch Abtasten eines Maßstabes 8c bestimmt wird. Außerdem sind Antriebe vorgesehen, um das Portal 2, den X-Schlitten 3 und die Pinole 4 in den jeweiligen Richtungen motorisch zu verstellen.

Am unteren Ende der Pinole 4 ist hierbei ein messender Tastkopf 5 vorgesehen. Der Tastkopf 5 weist eine Mechanik auf, um den hieran befestigten Taststift 10 bei Berührung eines zu vermessenden Werkstückes 7 in den Koordinatenrichtungen x, y und z auslenken zu können. Die Auslenkung wird hierbei über entsprechende Messsysteme, wie beispielsweise induktive Wegmesssysteme gemessen.

Zur Ansteuerung der Antriebe des Koordinatenmeßgerätes, zur Verarbeitung der gemessenen Maßstabswerte der Maßstäbe 8a bis 8c und zur Verarbeitung der Auslenkung des Taststiftes 10 gegenüber dem Tastkopfgehäuse des Tastkopfes 5 ist ein Steuer- und Auswerterechner 42 vorgesehen, in dem diese Steuerung untergebracht ist.

Das Koordinatenmessgerät ist natürlich nur rein beispielhaft und kann vielfältig variieren. Beispielsweise kann der Messtisch 1 in einer oder mehreren Richtungen beweglich gelagert sein. Zur Bewegung des Tastkopfes 5 kann anstelle der gezeigten Mechanik auch eine Mechanik vorgesehen sein, die ein oder mehrere Drehgelenke umfasst. Anstelle des messenden Tastkopfes 5 kann auch ein sogenannter schaltender Tastkopf verwendet werden, bei dem bei einer Berührung des Taststiftes 10 mit dem Werkstück 7 ein Signal ausgelöst wird, aufgrund dessen die Maßstabswerte der Maßstäbe 8a bis 8c übernommen werden.

Bei dem gezeigten Koordinatenmessgerät ist es erforderlich, dass automatisch anstelle des gezeigten Taststiftes 10 andere Taststifte 6 mit einer anderen Geometrie eingewechselt werden können, die in einem Magazin 9 bereitgehalten werden.

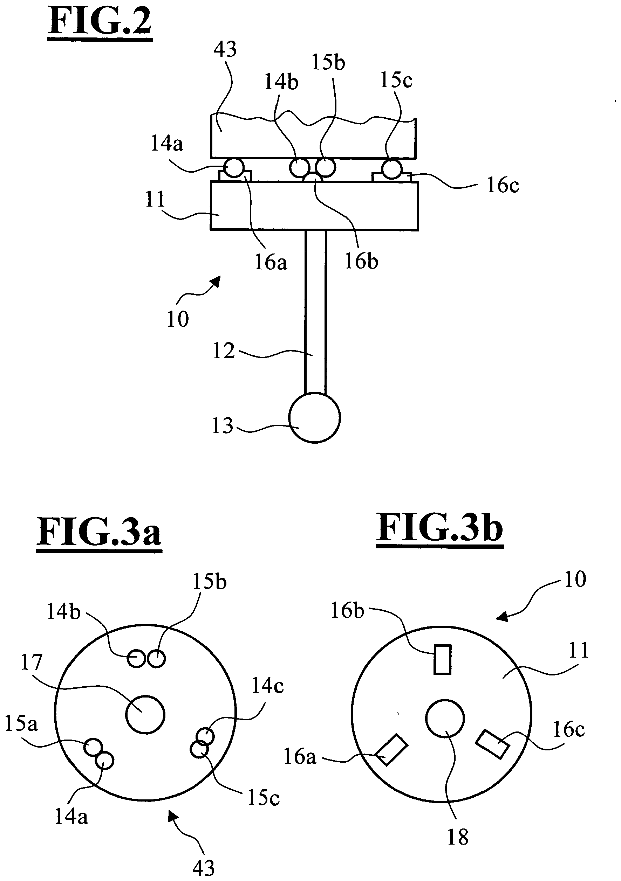

Hierzu wird eine sogenannte Taststiftwechselhalterung verwendet. Eine solche Taststiftwechselhalterung 43 wird schematisch in Figuren 2 und 3 gezeigt. Figur 2 zeigt hierbei den Taststift 10 in der Seitenansicht, der an einer Taststiftwechselhalterung 43 befestigt ist. Figur 3a zeigt die Taststiftwechselhalterung 43 gemäß Figur 2 von unten ohne den Taststift 10. Figur 3b zeigt den Taststift 10 gemäß Figur 2 von oben, ebenfalls im abmontierten Zustand. Wie aus den Figuren 2, 3a und 3b zu sehen ist, weist der Taststift 10 einen Taststiftteller 11 auf, an dessen unterem Ende eine Verlängerung 12 befestigt ist, die wiederum eine Tastkugel 13 trägt. Am oberen Ende des Taststifttellers 11 sind in einen Winkel von 120° gegeneinander versetzt angeordnet drei Zylinder 16a, 16b und 16c vorgesehen, die als Lager dienen sollen. Außerdem weist der Taststifteller 11 einen Spannadapter in Form einer ferromagnetischen Platte 18 auf, die dazu verwendet wird, um den Taststift 11 über eine Spanneinrichtung in Form eines Elektromagneten durch Magnetkraft gegen die Taststiftwechselhalterung 43 zu spannen.

Die Taststiftwechselhalterung 43 ihrerseits weist als Gegenlager zu den Lagern des Taststiftes (Zylinder 16a, 16b und 16c) drei Kugelpaare 14a,15a; 14b,15b; 14c,15c auf, auf denen im eingewechselten Zustand die Lager (Zylinder 16a, 16b und 16c) des Taststiftes zum liegen kommen, wie dies Figur 2 darstellt. Um die Lager des Taststiftes 10 (Zylinder 16a, 16b und 16c) gegen die Gegenlager der Taststiftwechselhalterung (Kugelpaare 14a,15a; 14b,15b; 14c,15c) zu spannen, weist die Taststiftwechselhalterung des weiteren als Spanneinrichtung einen Elektromagneten 17 auf, mit dem geeignete Magnetfelder erzeugt werden können, um die als Spannadapter wirkende ferromagnetische Platte 18 magnetisch anzuziehen.

Natürlich ist der hier beschriebene Wechselmechanismus nur rein beispielhaft und kann vielfältig variieren. Anstelle der magnetisch arbeitenden Spanneinrichtung (Elektromagnet 17) und dem zugehörigen Spannadapter (ferromagnetische Platte 18) kann beispielsweise auch ein mechanischer Greifer verwendet werden, der den Taststift gegen den Taststiftwechsler zieht. Es kann auch eine mit Vakuum arbeitende Saugeinrichtung vorgesehen werden, bei der ein am Taststift befestigter Saugnapf durch ein im Taststiftwechsler erzeugtes Vakuum gegen den Taststiftwechsler gezogen wird.

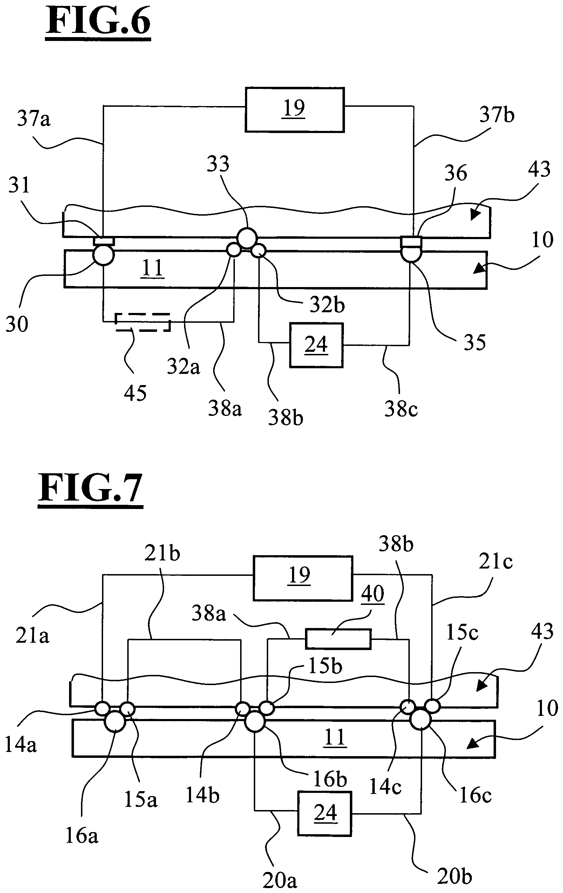

Auch Lager und Gegenlager können vielfältig variieren. Beispielsweise können die Zylinder (16a, 16b und 16c) am Taststiftwechsler befestigt sein und die Kugelpaare 14a,15a; 14b,15b; 14c,15c am Taststift 10. Auch vollkommen andere Lagerelemente, wie sie beispielsweise in Figur 6 gezeigt sind, sind möglich.

Selbstverständlich ist auch die Geometrie des Taststiftes 10 völlig beispielhaft. Beispielsweise kann der Taster ein "Kreuztaster" sein, der fünf in den jeweiligen Haupt-Messrichtungen ausgerichtete Verlängerungen aufweist, an deren Enden sich jeweils eine Tastkugel befindet. Die Verlängerung 12 kann auch Raumschräg sein und beispielsweise einen Knick aufweisen. Anstelle der Tastkugel 13 könnte auch ein Tastteller verwendet werden.

Beim Wechsel eines Taststiftes 10 gegen einen anderen Taststift 6 muss eine digitale Identifikationsinformation des Taststiftes ausgelesen werden, die den Taststift eindeutig identifiziert. In der Vergangenheit war dazu ein Chip im Taststiftteller 11 vorgesehen, der elektrisch mit zwei Kontakten an der Oberseite des Taststifttellers 11 leitend verbunden war, wobei nach dem Einwechseln die Kontakte entsprechend von Pins berührt wurden, die an der Taststiftwechselhalterung befestigt waren, sodass nunmehr von einer Auswerteschaltung die digitale Identifikationsinformation ausgelesen werden konnte.

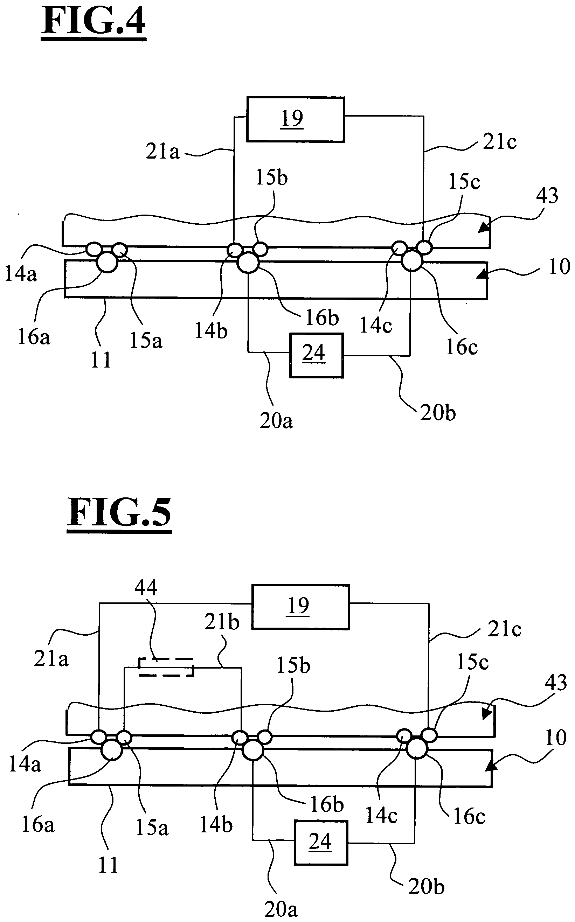

In erfindungsgemäßer weise werden bei dem in Figur 4 gezeigten Taststift 10, der hier nur rein schematisch mit einigen seiner Bauteile dargestellt ist, zwei der Lager (Zylinder 16b, 16c), die aus einem elektrisch leitendem Material gefertigt sind, leitend über elektrische Leitungen 20a, 20b mit dem Chip 24 verbunden, so dass über diese beiden Lager eine elektrische Verbindung mit dem Chip herstellbar ist, um hierüber die digitale Identifizierungsinformation auszulesen.

Des weiteren sind zwei der elektrisch leitenden Gegenlager (Kugeln 14b,15c) der Taststiftwechselhalterung über Leitungen 21a, 21c mit einer Auswerteschaltung 19 verbunden, die zum Auslesen und Überprüfen einer digitalen Identifizierungsinformation aus dem Chip 24 des Taststiftes 10 vorgesehen ist. Hierzu ist die Auswerteschaltung 19 mit der Kugel 14b des Gegenlagers 14b,15b leitend verbunden, so dass dann von der Schaltung 19 über die Leitung 21a, die Kugel 14b, den Zylinder 16b und die Leitung 20a eine erste leitende Verbindung zwischen dem Chip 24 und der Schaltung 19 besteht. Andererseits besteht über die Leitung 21c, die Kugel 15c, den Zylinder 16c und die Leitung 20b eine zweite leitende Verbindung.

Über diese leitenden Verbindungen zwischen der Auswerteschaltung 19 und dem Chip 24 kann nunmehr die digitale Identifikationsinformation ausgelesen werden, um hierdurch den Taststift 10 und die hiermit verbundenen Daten (z.B. Parameter des Taststiftes, die im Steuer- und Auswerterechner 42 hinterlegt sind) auswählen zu können.

Die Auswerteschaltung 19 kann natürlich ebenfalls vielfältig variieren. Es kann sich hierbei beispielsweise um einen Mikroprozessor handeln, der in der Taststiftwechseleinrichtung 43, im Tastkopf 5 oder an einer sonstigen Stelle im Koordinatenmessgerät angeordnet ist. Die Auswerteschaltung kann jedoch auch der Steuer- und Auswerterechner 42 sein, der diese Funktion dann durch ein entsprechendes Programm wahrnimmt.

Figur 5 zeigt eine Weiterbildung der Figur 4, in der gleiche Bauteile mit den gleichen Bezugszeichen versehen sind. In der gezeigten Schaltung ist gegenüber Figur 4 die elektrische Leitung 21a nicht mit dem Gegenlager (14b,15b) leitend verbunden sondern vielmehr mit dem Gegenlager (14a,15a), insbesondere mit der Kugel 14a. Wie bereits oben ausgeführt, besteht das Gegenlager 14a,15a aus zwei separaten, elektrisch gegeneinander isolierten Bauteilen, nämlich zwei Kugeln 14a,15a. Die Kugel 14a ist hierbei leitend über die Leitung 21a mit der Auswerteschaltung 19 verbunden, während die Kugel 15a über die Leitung 21b mit der Kugel 14b des Gegenlagers 14b,15b, hier insbesondere mit der Kugel 14b verbunden ist. Die Leitung 21b kann alternativ zusätzlich einen Widerstand 44 beinhalten, der in Figur 4 nur strichliniert angedeutet ist.

Für den Fall, dass der Taststift 10 von der Taststiftwechselhalterung 43 aufgenommen ist, wie Figur 5 dies darstellt, berührt das zugehörige, elektrisch leitende Lager 16a des Taststiftes 10 beide gegeneinander isolierte Bauteile 14a, 15a des Gegenlagers. Hierdurch entsteht eine elektrische Überbrückung, so dass hierdurch zwischen dem Gegenlager 14b, 15b und der Auswerteschaltung 19 eine leitende Verbindung entsteht, die über die Leitung 21a, die Kugel 14a, den Zylinder 16a, die Kugel 15a, die Leitung 21b (ggf. mit Widerstand 44) und die Kugel 14b hergestellt wird.

Dies hat folgenden zusätzlichen Effekt. In der gezeigten Ausführungsform ist die elektrische Verbindung zwischen der Auswerteschaltung 19 nunmehr so gewählt, dass alle drei Lager 16a,16b,16c des Taststiftes 10 die zugehörigen Gegenlager 14a,15a; 14b,15b; 14c,15c der Taststiftwechseleinrichtung berühren müssen, so dass neben dem Auslesen der Identifikationsinformation zusätzlich von der Auswerteschaltung 19 auch noch überprüft werden kann, ob der Taststift korrekt von der Taststiftwechseleinrichtung 43 aufgenommen wurde. Die Auswerteschaltung 19 muss in diesem Falle (wie auch im Falle der nachfolgenden Ausführungsbeispiele) natürlich um die betreffende Funktionalität erweitert werden. Hierzu ist die Auswerteschaltung 19 zusätzlich so konfiguriert, dass diese den korrekten Sitz des Taststiftes überprüft wobei die Auswerteschaltung hierzu überprüft, ob die Identifizierungsinformation aus dem Chip 24 ausgelesen werden kann

Liegt beispielsweise das Lager 16a nicht korrekt auf beiden Kugeln des Gegenlagers 14a, 15a auf, so wird hierdurch der Stromkreis nicht geschlossen mit dem Effekt, dass die digitale Identifikationsinformation nicht aus dem Chip 24 ausgelesen werden kann. In diesem Fall veranlasst die Auswerteschaltung 19 das Koordinatenmessgerät dazu, den Taststift 10 nochmals im Magazin 9 abzulegen und den Taststift erneut aufzunehmen. Jetzt wird erneut überprüft, ob die Identifikationsinformation ausgelesen werden kann.

Die im Zusammenhang mit Figur 5 dargestellte Anordnung erfüllt die zusätzliche Aufgabe, die Lage des Taststiftes 10 an der Taststiftwechselhalterung 43 zu überprüfen bereits relativ gut. Allerdings versagt die Schaltung, wenn das Lager 16b nicht korrekt auf der Kugel 15b aufliegt oder das Lager 16c nicht auf der Kugel 14c aufliegt. In diesem Fall wird, trotz fehlerhafter Aufnahme des Taststiftes, dennoch die Fehllage nicht detektiert.

Eine erste Lösung für dieses Problem ist hierbei in Figur 6 dargestellt. Wie hieraus zu sehen, wurde die Anordnung insbesondere hinsichtlich der Art der Lager (30; 32a,32b; 35) und hinsichtlich der Gegenlager 31, 33, 36 geändert. Beim Gegenlager 36 handelt es sich hierbei um einen Zylinder mit einer Bohrung entlang der Zylinderachse, während das zugehörige Lager 35 als Kugel ausgestaltet ist, sodass hierdurch ein Kugelgelenk entsteht. Das Lager 32a, 32b besteht wiederum aus Kugeln 32a und 32b, während das Gegenlager 33 ein Zylinder ist. Das dritte Lager 30 ist ebenfalls eine Kugel, während das Gegenlager 31 eine plane Platte ist. Wie hieraus zu sehen, ist in der gezeigten Ausführungsform lediglich das Lager 32a,32b aus zwei separaten, elektrisch gegeneinander isolierten Bauteilen (Kugeln 32a,32b) gefertigt, während die restlichen Lager 30,35 und Gegenlager 31, 33, 36 einteilig ausgeführt sind. Die gezeigte Leitung 38a kann hierbei zusätzlich einen Widerstand 45 beinhalten, der in Figur 6 deshalb strichliniert dargestellt ist.

Im gezeigten Zustand, in dem der Taststift 10 aufgenommen ist, bestehen zwischen dem Chip 24 und der Auswerteschaltung 19 folgende beiden elektrischen Verbindungen. Eine erste elektrische Verbindung über die Leitung 37a, das Gegenlager 31, das Lager 30, die Leitung 38a (ggf. über den Widerstand 45), die Kugel 32a des Lagers 32a,32b, das Lager 33, die Kugel 32b des Lagers 32a,32b, und die Leitung 38b. Eine zweite Verbindung besteht über die Leitung 37b, das Gegenlager 36, das Lager 35 und die Leitung 38c. Hierdurch kann nunmehr verbessert durch die Auswerteschaltung 19 der exakte Sitz des Taststiftes 10 an der Taststiftwechselhalterung 43 überprüft werden, da nunmehr zwischen allen Lagern 30; 32a,32b; 35 und den zugeordneten Gegenlagern der Kontakt bestehen muss, um die erforderliche elektrische Verbindung zwischen der Auswerteschaltung 19 und dem Chip 24 herstellen zu können. Allerdings besteht immer noch die Gefahr, dass das Lager 35 nicht ganz exakt im Gegenlager 36 zum liegen kommt.

Eine Anordnung, mit der in besonders zuverlässiger Weise die richtige Position des Taststiftes 10 in der Taststiftwechselhalterung 43 bestimmt werden kann ist in Figur 7 zu sehen, die wiederum eine Weiterbildung gemäß Figuren 4 und 5 darstellt. Gleiche Komponenten werden somit auch mit gleichen Bezugszeichen versehen. Im Gegensatz zur Anordnung gemäß Figur 4 und 5 wurden in dieser Ausführungsvariante die Kugel 15b des Gegenlagers 14b,15b und die Kugel 14c des Gegenlagers 14c, 15c leitend miteinander verbunden, wobei diese leitende Verbindung die Leitung 38a, einen Widerstand 40 und eine Leitung 38b umfasst. Hierdurch ergibt sich eine Parallelschaltung vom Widerstand 40 und vom Chip 24. Für den Fall, dass das Lager 16b nicht korrekt auf der Kugel 15b des Gegenlagers 14b,15b aufliegt, oder für den Fall, dass das Lager 16c nicht korrekt auf der Kugel 14c des Gegenlagers 14c,15c aufliegt ergibt sich somit kein Stromfluss durch den Widerstand 40. Da der Gleichstromwiderstand des Chips 24 relativ hoch ist, hat dies zur Folge, dass der fließende Gleichstrom klein ist. Ist der Taststift hingegen richtig an der Taststiftwechselhalterung 43 aufgenommen, so ergibt sich ein deutlich höherer Stromfluss, der von der Auswerteschaltung gemessen werden kann.

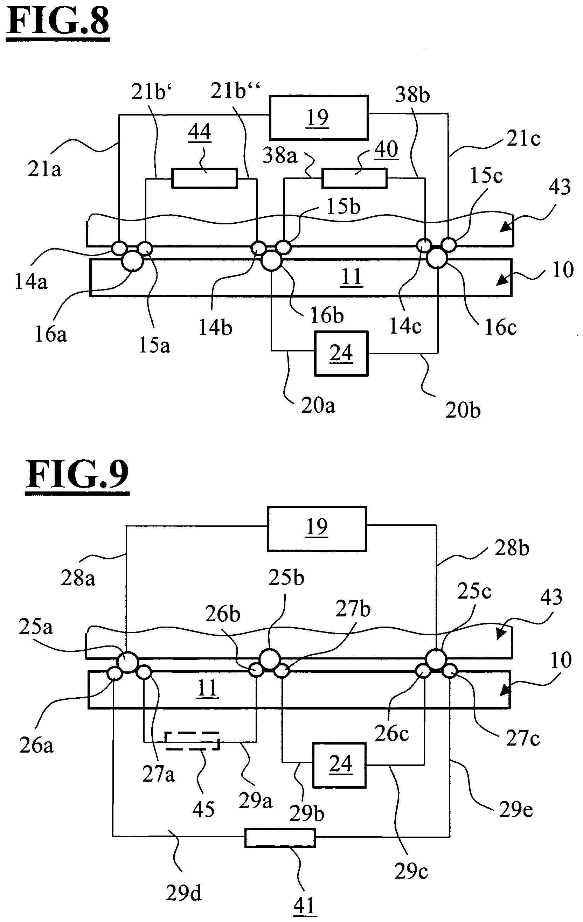

Zur Überprüfung des korrekten Sitzes des Taststiftes gemäß dem Ausführungsbeispiel gem. Figur 7 und allen noch folgenden Ausführungsbeispielen gemäß Figur 8 und 9 genügt es natürlich prinzipiell, wie oben ausgeführt, zu überprüfen, ob die Identifizierungsinformation aus dem Chip 24 auszulesen werden kann. Allerdings sollte, anstatt dessen oder zusätzlich hierzu die Auswerteschaltung 19 so konfiguriert sein, dass sie zur Überprüfung eine elektrische Größe, wie insbesondere Strom oder Spannung, misst und überprüft, ob diese gemessene Größe mit einem Sollwert übereinstimmt. Entspricht der gemessene Spannungsabfall oder der gemessene Stromfluss nicht den durch die Schaltung vordefinierten Werten, so kann die Auswerteschaltung 19 das Koordinatenmessgerät beispielsweise veranlassen, den Taststift 10 im Magazin 9 abzulegen und erneut aufzunehmen. Alternativ kann auch die Spannkraft der Spanneinrichtung kurzzeitig verringert und wieder erhöht werden.

Figur 8 zeigt eine alternative Ausführungsvariante des Ausführungsbeispiels gemäß Figur 7, bei der, wie schon im Zusammenhang mit Figur 5 erwähnt, in die Leitung 21b ein Widerstand 44 integriert wurde, sodass nunmehr der Strom über die Leitung 21b', den Widerstand 44 und die Leitung 21b" fließt. Hierdurch können definierte Widerstandsverhältnisse hergestellt werden.

Bei den Ausführungsvarianten nach Figur 7 und 8 ist also
- das eine elektrisch isolierte Bauteil (Kugel 14b) des Gegenlagers 14b,15b leitend oder über einen Widerstand 44 mit einem elektrisch isolierten Bauteil (Kugel 15a) des Gegenlagers 14a,15a verbunden, und das andere elektrisch isolierte Bauteil (Kugel 15b) des Gegenlagers 14b,15b über einen Widerstand (40) leitend mit dem Gegenlager 14c,15c verbunden und/oder
- das eine elektrisch isolierte Bauteil (Kugel 15c) des Gegenlagers 14c,15c leitend mit der Auswerteschaltung 19 verbunden, und das andere elektrisch isolierte Bauteil (Kugel 14c) des Gegenlagers 14c,15c über einen Widerstand 40 leitend mit dem Gegenlager 14b,15b verbunden.

Bei Berührung der zugehörigen, elektrisch leitenden Lager 16a, 16b, 16c des Taststiftes 10 mit jeweils beiden gegeneinander isolierten Bauteilen des Gegenlagers 14a,14b sowie des Gegenlagers 14b, 15b und/oder des Gegenlagers 14c,15c entstehen elektrische Überbrückungen und somit zwischen dem Gegenlager 14b, 15b und dem Gegenlager 14c,15c zwei parallele Strompfade, wobei sich im ersten Strompfad der Chip 24 befindet und sich im zweiten Strompfad der Widerstand 40 befindet.

Figur 9 zeigt ein drittes grundsätzliches Ausführungsbeispiel in rein schematischer Form, bei dem die Lager 26a, 27a; 26b, 27b; 26c, 27c des Taststiftes 10 jeweils aus zwei separaten, elektrisch gegeneinander isolierten Bauteilen bestehen, nämlich aus Paaren von Kugeln 26a,27a und 26b,27b; und 26c,27c, während die Gegenlager 25a, 25b,25c aus einteiligen Zylindern bestehen. Hierin ist die Auswerteschaltung 19 über die Leitungen 28a und 28b mit den Zylindern 25a und 25c leitend verbunden. Ferner sind im Taststift 10 die Kugeln 26a und 27c der Lager 26a,27a und 26c,27c leitend über die Leitung 29d, den Widerstand 41 und die Leitung 29e verbunden. Des weiteren sind die Kugeln 27a und 26b der Lager 26a,27a und 26b,27b über die Leitung 29a leitend verbunden. Außerdem ist die Kugel 27b des Lagers 26b,27b über die Leitung 29b mit dem Chip 24 verbunden und die Kugel 26c des Lagers 26c,27c über die Leitung 29c mit dem Chip 24 verbunden.

Hierdurch ergibt sich eine Parallelschaltung vom Widerstand 41 und vom Chip 24. Für den Fall, dass das Gegenlager 25a nicht korrekt auf der Kugel 26a des Lagers 26a,27a aufliegt, oder für den Fall, dass das Gegenlager 25c nicht korrekt auf der Kugel 27c des Gegenlagers 26c,27c aufliegt ergibt sich somit kein Stromfluss durch den Widerstand 41. Da der Gleichstromwiderstand des Chips 24 sehr hoch ist, hat dies zur Folge, dass der fließende Gleichstrom sehr klein ist. Ist der Taststift hingegen richtig an der Taststiftwechselhalterung 43 aufgenommen, so ergibt sich ein deutlich höherer Stromfluss, der von der Auswerteschaltung gemessen werden kann.

Auch in dieser Ausführungsvariante kann in die Leitung 29a ein Widerstand 45 intergriert werden, der in Figur 9 deshalb nur strichliniert dargestellt ist.

Bei dieser Ausführungsvariante ist also
- das eine elektrisch isolierte Bauteil (Kugel 27a) des Lagers 26a,27a leitend oder über einen Widerstand 45 mit einem elektrisch isolierten Bauteil des Lagers 26b,27b verbunden, und das andere elektrisch isolierte Bauteil (Kugel 26a) des Lagers 26a,27a über einen Widerstand 41 leitend mit dem dritten Lager 26c,27c verbunden und/oder
- das eine elektrisch isolierte Bauteil (Kugel 26c) des Lagers 26c,27c leitend über den Chip 24 mit einem elektrisch isolierten Bauteil (Kugel 27b) des Lagers 26b,27b verbunden, und das andere elektrisch isolierte Bauteil (Kugel 27c) des Lagers 26c,27c über einen Widerstand 41 leitend mit dem Lager 26a,27a verbunden.

Bei Berührung der zugehörigen, elektrisch leitenden Gegenlager 25a, 25b, 25c mit jeweils beiden gegeneinander isolierten Bauteilen der Lagers 26a,27a und des Lagers 26b,27b und/oder des Lagers 26c,27c entstehen elektrische Überbrückungen und somit zwischen dem Lager 26a,27a und dem Lager 26c,27c zwei parallele Strompfade, wobei sich im ersten der Chip 24 befindet und sich im zweiten der Widerstand 41 befindet. Die Auswertungsschaltung 19 kann deshalb vollkommen analog zu den vorhergehenden Beispielen gemäß Figuren 7 oder 8 durch Auslesen der digitalen Identifizierungsinformation den Taststift 10 zuordnen und durch Messen des Stromes die korrekte Lage des Taststiftes 10 verifizieren.

Abschließend wird darauf hingewiesen, dass die gezeigten Ausführungsbeispiele natürlich vielfältig variieren können. Bei dem Ausführungsbeispiel gemäß Figur 8 kann beispielsweise der Chip 24 mit zwei beliebigen Lagern der Lager 16a, 16b und 16c leitend verbunden sein. Im Ausführungsbeispiel nach Figur 7 kann der Chip 24 anstelle mit dem Lager 16b auch mit dem Lager 16a leitend verbunden sein.

## Patentansprüche

1. Taststift (10), der auswechselbar am Tastkopf (5) eines Koordinatenmessgerätes befestigt werden kann, wobei der Taststift mehrere Lager (16a-16c) umfasst, die zur Lagerung des Taststiftes auf dafür vorgesehenen Gegenlagern einer Taststiftwechselhalterung (43) des Tastkopfes eingerichtet sind, und wobei der Taststift einen Chip (24) umfasst, aus dem eine digitale Identifizierungsinformation zur Identifizierung des Taststiftes ausgelesen werden kann, wobei die Lager aus einem elektrisch leitendem Material sind und wenigstens zwei der Lager (16b,16c) leitend mit dem Chip (24) verbunden sind, so dass über diese beiden Lager eine elektrische Verbindung mit dem Chip herstellbar ist, um hierüber die digitale Identifizierungsinformation auszulesen.

2. Taststift nach Anspruch 1, wobei wenigstens ein erstes Lager (26b,27b) des Taststiftes aus zwei separaten, elektrisch gegeneinander isolierten Bauteilen (26b,27b oder 32a,32b) besteht und eines dieser Bauteile (27b oder 32b) leitend über den Chip (24) mit einem zweiten Lager (26c,27c oder 35) verbunden ist, und das andere dieser Bauteile (26b oder 32a) leitend oder über einen Widerstand (45) mit einem dritten Lager (26a,27a oder 30) verbunden ist, so dass bei Berührung eines zugehörigen, elektrisch leitenden Gegenlagers (25b oder 33) mit beiden gegeneinander isolierten Bauteilen des ersten Lagers (26b,27b oder 32a,32b) eine elektrische Überbrückung entsteht und somit zwischen dem zweiten und dem dritten Lager ein Strompfad entsteht, in dem sich der Chip (24) befindet.

3. Taststift nach Anspruch 2, wobei zusätzlich das zweite Lager (26c,27c) und/oder das dritte Lager (26a,27a) des Taststiftes jeweils aus zwei separaten, elektrisch gegeneinander isolierten Bauteilen (26a,27a; 26b,27b) bestehen, wobei
- das eine elektrisch isolierte Bauteil (27a) des dritten Lagers (26a, 27a) leitend oder über einen Widerstand (45) mit einem elektrisch isolierten Bauteil (26b) des ersten Lagers (26b,27b) verbunden ist, und das andere elektrisch isolierte Bauteil (26a) des dritten Lagers (26a,27a) über einen Widerstand (41) leitend mit dem zweiten Lager (26c,27c) verbunden ist und/oder
- das eine elektrisch isolierte Bauteil (26c) des zweiten Lagers (26c,27c) leitend über den Chip (24) mit einem elektrisch isolierten Bauteil des ersten Lagers (26b,27b) verbunden ist, und das andere elektrisch isolierte Bauteil (27c) des zweiten Lagers (26c,27c) über einen Widerstand (41) leitend mit dem dritten Lager (26a,27a) verbunden ist so dass bei Berührung der zugehörigen, elektrisch leitenden Gegenlager (25a,25b,25c) mit jeweils beiden gegeneinander isolierten Bauteilen des ersten Lagers (26b,27b) und des zweiten Lagers (26c,27c) und/oder des dritten Lagers (26a,27a) elektrische Überbrückungen entstehen und somit zwischen dem zweiten und dem dritten Lager zwei parallele Strompfade entstehen, wobei sich im ersten der Chip (24) befindet und sich im zweiten der Widerstand (41) befindet.

4. Taststift nach einem der Ansprüche 1 bis 3, wobei die zwei separaten, elektrisch gegeneinander isolierten Bauteile eines Lagers jeweils Kugeln sind.

5. Taststift nach einem der Ansprüche 1 bis 4, wobei der Taststift einen Spannadapter (18) aufweist, der zur Zusammenwirkung mit einer Spanneinrichtung (17) der Taststiftwechselhalterung (43) vorgesehen ist, um hierdurch gegen die Taststiftwechselhalterung gespannt zu werden.

6. Taststiftwechselhalterung (43), eingerichtet zur auswechselbaren Aufnahme eines Taststiftes (10) nach einem der vorhergehenden Ansprüche 1 bis 5 am Tastkopf eines Koordinatenmessgerätes, wobei die Taststiftwechselhalterung mehrere Gegenlager (14a,15a; 14b,15b; 14c,15c) umfasst, die zur Zusammenwirkung mit den Lagern (16a-16c) des Taststiftes vorgesehen sind, und wobei die Taststiftwechselhalterung eine Auswerteschaltung (19) umfasst, die zum Auslesen und Überprüfen der digitalen Identifizierungsinformation aus dem Chip (24) des Taststiftes eingerichtet ist, wobei die Gegenlager aus einem leitenden Material gefertigt sind und die Auswerteschaltung wenigstens mit einem ersten und einem zweiten Gegenlager leitend verbunden ist.

7. Taststiftwechselhalterung nach Anspruch 6, wobei ein erstes Gegenlager (14a,15a) der Taststiftwechselhalterung aus zwei separaten, elektrisch gegeneinander isolierten Bauteilen (14a,15a) besteht und eines dieser Bauteile (15a) leitend oder über einen Widerstand (44) mit einem dritten Gegenlager (14b,15b) verbunden ist, und das andere dieser Bauteile (14a) leitend mit der Auswerteschaltung (19) verbunden ist, so dass bei Berührung eines zugehörigen, elektrisch leitenden Lagers (16a) eines Taststiftes mit beiden gegeneinander isolierten Bauteilen (14a,15a) des ersten Gegenlagers eine elektrische Überbrückung entstehen kann und hierdurch zwischen dem dritten Gegenlager und der Auswerteschaltung eine leitende Verbindung entsteht.

8. Taststiftwechselhalterung nach Anspruch 7, wobei auch das zweite und/oder das dritte Gegenlager (14b,15b;14c,15c) der Taststiftwechselhalterung aus zwei separaten, elektrisch gegeneinander isolierten Bauteilen bestehen und wobei
- das eine elektrisch isolierte Bauteil des dritten Gegenlagers (14b,15b) leitend oder über einen Widerstand (44) mit einem elektrisch isolierten Bauteil (15a) des ersten Gegenlagers (14a,15a) verbunden ist, und das andere elektrisch isolierte Bauteil (15b) des dritten Gegenlagers (14b,15b) über einen Widerstand (40) leitend mit dem zweiten Gegenlager verbunden ist und/oder
- das eine elektrisch isolierte Bauteil (15c) des zweiten Gegenlagers (14c,15c) leitend mit der Auswerteschaltung (19) verbunden ist, und das andere elektrisch isolierte Bauteil (14c) des zweiten Gegenlagers (14c,15c) über einen Widerstand (40) leitend mit dem dritten Gegenlager verbunden ist
so dass bei Berührung der zugehörigen, elektrisch leitenden Lager (16a,16b,16c) des Taststiftes mit jeweils beiden gegeneinander isolierten Bauteilen des ersten Gegenlagers (14a,15a) sowie des zweiten Gegenlagers (14c,15c) und/oder des dritten Gegenlagers (14b,15b) elektrische Überbrückungen entstehen und somit zwischen dem ersten und dem zweiten Gegenlager zwei parallele Strompfade entstehen können , wobei sich im ersten der Chip (24) befindet und sich im zweiten der Widerstand (40) befindet.

9. Taststiftwechselhalterung (43) nach einem der Ansprüche 6 bis 8, wobei die Auswerteschaltung (19) zusätzlich so konfiguriert ist, dass diese den korrekten Sitz des Taststiftes überprüft wobei die Auswerteschaltung hierzu:
- überprüft, ob die Identifizierungsinformation aus dem Chip ausgelesen werden kann und/oder
- wenigstens eine elektrische Größe, wie insbesondere Strom oder Spannung, misst und überprüft, ob diese gemessene Größe mit einem Sollwert übereinstimmt.

10. Taststiftwechselhalterung nach Anspruch 6 bis 9, wobei die zwei separaten, elektrisch gegeneinander isolierten Bauteile eines Gegenlagers jeweils Kugeln sind.

11. Taststiftwechselhalterung nach Anspruch 6 bis 10, mit einer Spanneinrichtung (17), die mit einem Spannadapter (18) im Taststift zusammenwirken kann, um den Taststift gegen die Taststiftwechselhalterung zu spannen.

12. Tastkopf eines Koordinatenmessgerätes, wobei der Tastkopf einem Taststift nach einem der Ansprüche 1, 4 oder 5 umfasst und eine Taststiftwechselhalterung nach einem der Ansprüche 6 bis 11 umfasst

13. Tastkopf eines Koordinatenmessgerätes, wobei der Tastkopf einem Taststift nach einem der Ansprüche 1 bis 5 umfasst und eine Taststiftwechselhalterung nach einem der Ansprüche 6, 9, 10 oder 11 umfasst.

## Claims

1. Probe pin (10) which can be exchangeably fastened to the probe head (5) of a coordinate measuring machine, wherein the probe pin comprises a plurality of bearings (16a-16c) which are designed to support the probe pin on mating bearings, which are provided for them, of a changeable probe pin holder (43) of the probe head, wherein the probe pin comprises a chip (24) from which digital identification information for identifying the probe pin can be read out, wherein the bearings are composed of an electrically conductive material and at least two of the bearings (16b, 16c) are connected to the chip (24) in a conductive manner, so that an electrical connection can be established with the chip by means of these two bearings in order to read out the digital identification information by means of the said electrical connection.

2. Probe pin according to Claim 1, wherein at least one first bearing (26b, 27b) of the probe pin consists of two separate components (26b, 27b or 32a, 32b) which are electrically insulated from one another and one of these components (27b or 32b) is conductively connected to a second bearing (26c, 27c or 35) by means of the chip (24), and the other of these components (26b or 32a) is connected to a third bearing (26a, 27a or 30) in a conductive manner or by means of a resistor (45), so that, when an associated, electrically conductive mating bearing (25b or 33) makes contact with the two components, which are insulated from one another, of the first bearing (26b, 27b or 32a, 32b), an electrical bridge is produced and therefore a current path in which the chip (24) is located is produced between the second and the third bearing.

3. Probe pin according to Claim 2, wherein the second bearing (26c, 27c) and/or the third bearing (26a, 27a) of the probe pin additionally each consist of two separate components (26a, 27a; 26b, 27b) which are electrically insulated from one another, wherein
- one electrically insulated component (27a) of the third bearing (26a, 27a) is connected to an electrically insulated component (26b) of the first bearing (26b, 27b) in a conductive manner or by means of a resistor (45), and the other electrically insulated component (26a) of the third bearing (26a, 27a) is connected to the second bearing (26c, 27c) by means of a resistor (41) in a conductive manner, and/or
- one electrically insulated component (26c) of the second bearing (26c, 27c) is connected to an electrically insulated component of the first bearing (26b, 27b) in a conductive manner by means of the chip (24), and the other electrically insulated component (27c) of the second bearing (26c, 27c) is connected to the third bearing (26a, 27a) by means of a resistor (41) in a conductive manner,
so that, when the associated, electrically conductive mating bearings (25a, 25b, 25c) make contact with each of the two components, which are insulated from one another, of the first bearing (26b, 27b) and of the second bearing (26c, 27c) and/or of the third bearing (26a, 27a), electrical bridges are produced and therefore two parallel current paths are produced between the second and the third bearing, wherein the chip (24) is located in the first current path and the resistor (41) is located in the second current path.

4. Probe pin according to one of Claims 1 to 3, wherein the two separate components, which are electrically insulated from one another, of a bearing are each balls.

5. Probe pin according to one of Claims 1 to 4, wherein the probe pin has a clamping adapter (18) which is intended to interact with a clamping device (17) of the changeable probe pin holder (43) in order to be clamped to the changeable probe pin holder as a result.

6. Changeable probe pin holder (43), which is designed to exchangeably receive a probe pin (10) according to one of the preceding Claims 1 to 5 on the probe head of a coordinate measuring machine, wherein the changeable probe pin holder comprises a plurality of mating bearings (14a, 15a; 14b, 15b; 14c, 15c) which are intended to interact with the bearings (16a-16c) of the probe pin, and wherein the changeable probe pin holder comprises an evaluation circuit (19) which is designed to read out and check the digital identification information from the chip (24) of the probe pin, wherein the mating bearings are manufactured from a conductive material and the evaluation circuit is connected at least to a first and a second mating bearing in a conductive manner.

7. Changeable probe pin holder according to Claim 6, wherein a first mating bearing (14a, 15a) of the changeable probe pin holder consists of two separate components (14a, 15a) which are electrically insulated from one another, and one of these components (15a) is connected to a third mating bearing (14b, 15b) in a conductive manner or by means of a resistor (44), and the other of these components (14a) is connected to the evaluation circuit (19) in a conductive manner, so that, when an associated, electrically conductive bearing (16a) of a probe pin makes contact with the two components (14a, 15a), which are insulated from one another, of the first mating bearing, an electrical bridge can be produced and a conductive connection is produced between the third mating bearing and the evaluation circuit as a result.

8. Changeable probe pin holder according to Claim 7, wherein the second and/or the third mating bearing (14b, 15b; 14c, 15c) of the changeable probe pin holder also consists of two separate components which are electrically insulated from one another, and wherein
- one electrically insulated component of the third mating bearing (14b, 15b) is connected to an electrically insulated component (15a) of the first mating bearing (14a, 15a) in a conductive manner or by means of a resistor (44), and the other electrically insulated component (15b) of the third mating bearing (14b, 15b) is connected to the second mating bearing by means of a resistor (40) in a conductive manner, and/or
- one electrically insulated component (15c) of the second mating bearing (14c, 15c) is connected to the evaluation circuit (19) in a conductive manner, and the other electrically insulated component (14c) of the second mating bearing (14c, 15c) is connected to the third mating bearing by means of a resistor (40) in a conductive manner,
so that, when the associated, electrically conductive bearing (16a, 16b, 16c) of the probe pin makes contact with each of the two components, which are insulated from one another, of the first mating bearing (14a, 15a) and of the second mating bearing (14c, 15c) and/or of the third mating bearing (14b, 15b), electrical bridges are produced, and therefore two parallel current paths can be produced between the first and the second mating bearing, wherein the chip (24) is located in the first current path and the resistor (40) is located in the second current path.

9. Changeable probe pin holder (43) according to one of Claims 6 to 8, wherein the evaluation circuit (19) is additionally configured such that it checks for correct mounting of the probe pin, wherein, to this end, the evaluation circuit:
- checks whether the identification information can be read out from the chip and/or
- measures at least one electrical variable, such as current or voltage in particular, and checks whether this measured variable corresponds to a setpoint value.

10. Changeable probe pin holder according to Claims 6 to 9, wherein the two separate components, which are electrically insulated from one another, of a mating bearing are each balls.

11. Changeable probe pin holder according to Claims 6 to 10, comprising a clamping device (17) which can interact with a clamping adapter (18) in the probe pin in order to clamp the probe pin to the changeable probe pin holder.

12. Probe head of a coordinate measuring machine, wherein the probe head comprises a probe pin according to one of Claims 1, 4 and 5 and comprises a changeable probe pin holder according to one of Claims 6 to 11.

13. Probe head of a coordinate measuring machine, wherein the probe head comprises a probe pin according to one of Claims 1 to 5 and comprises a changeable probe pin holder according to one of Claims 6, 9, 10 and 11.

## Revendications

1. Palpeur (10), pouvant être fixé de manière échangeable à une tête de palpeur (5) d'un appareil de mesure de coordonnées, dans lequel le palpeur comprend plusieurs paliers (16a-16c) qui sont conçus pour supporter le palpeur sur des contre-paliers prévus à cet effet pour le support du palpeur, d'un élément de fixation interchangeable de palpeur (43) de la tête de palpeur, et dans lequel le palpeur comprend une puce (24) à partir de laquelle une information d'identification numérique permettant d'identifier le palpeur peut être lue, dans lequel les paliers sont constitués d'un matériau électriquement conducteur et au moins deux des paliers (16b, 16c) sont reliés de manière conductrice à la puce (24) de manière à ce qu'une liaison électrique puisse être établie avec la puce par l'intermédiaire desdits deux paliers afin de pouvoir lire par ce biais l'information d'identification numérique.

2. Palpeur selon la revendication 1, dans lequel au moins un premier palier (26b, 27b) du palpeur est constitué de deux composants (26b, 27b ou 32a, 32b) séparés et électriquement isolés l'un de l'autre et l'un desdits composants (27b ou 32b) est relié de manière conductrice par l'intermédiaire de la puce (24) à un deuxième palier (26c, 27c ou 35), et l'autre desdits composants (26b ou 32a) est relié de manière conductrice ou par l'intermédiaire d'une résistance (45) à un troisième palier (26a, 27a ou 30) de manière à ce que, lors d'un contact d'un contre-palier électriquement conducteur (25b ou 33) associé avec deux composants isolés l'un de l'autre du premier palier (26b, 27b ou 32a, 32b), un pontage électrique s'établisse et de ce fait, qu'un trajet de courant s'établisse entre les deuxième et troisième paliers, sur lequel se trouve la puce (24).

3. Palpeur selon la revendication 2, dans lequel le deuxième palier (26c, 27c) et/ou le troisième palier (26a, 27a) du palpeur sont en outre respectivement constitués de deux composants séparés et électriquement isolés l'un de l'autre (26a, 27a ; 26b, 27b), dans lequel
- ledit composant électriquement isolé (27a) du troisième palier (26a, 27a) est relié de manière conductrice ou par l'intermédiaire d'une résistance (45) à un composant électriquement isolé (26b) du palier (26b, 27b), et l'autre composant électriquement isolé (26a) du troisième palier (26a, 27a) est relié de manière conductrice par l'intermédiaire d'une résistance (41) au deuxième palier (26c, 27c), et/ou
- ledit composant électriquement isolé (26c) du deuxième palier (26c, 27c) est relié de manière conductrice par l'intermédiaire de la puce (24) à un composant électriquement isolé du premier palier (26b, 27b), et l'autre composant électriquement isolé (27c) du deuxième palier (26c, 27c) est relié de manière conductrice par l'intermédiaire d'une résistance (41) au troisième palier (26a, 27a),
de manière à ce que, lors d'un contact du contre-palier (25a, 25b, 25c) électriquement conducteur associé avec les deux composants respectivement isolés l'un de l'autre du premier palier (26b, 27b) et du deuxième palier (26c, 27c) et/ou du troisième palier (26a, 27a), des pontages électriques s'établissent et de ce fait, deux trajets de courant parallèles s'établissent entre les deuxième et troisième paliers, la puce (24) se trouvant sur le premier trajet et la résistance (41) se trouvant sur le deuxième trajet.

4. Palpeur selon l'une quelconque des revendications 1 à 3, dans lequel les deux composants séparés et électriquement isolés l'un de l'autre d'un palier sont respectivement des billes.

5. Palpeur selon l'une quelconque des revendications 1 à 4, dans lequel le palpeur comporte un adaptateur de serrage (18) qui est prévu pour coopérer avec un dispositif de serrage (17) de l'élément de fixation interchangeable de palpeur (43) afin qu'il soit serré par l'intermédiaire de celui-ci contre l'élément de fixation interchangeable de palpeur.

6. Elément de fixation interchangeable de palpeur (43), conçu pour recevoir de manière interchangeable un palpeur (10) selon l'une quelconque des revendications 1 à 5 précédentes sur la tête de palpeur d'un appareil de mesure de coordonnées, dans lequel l'élément de fixation interchangeable de palpeur comprend plusieurs contre-paliers (14a, 15a ; 14b, 15b ; 14c, 15c) qui sont prévus pour coopérer avec les paliers (16a-16c) du palpeur, et dans lequel l'élément de support interchangeable de palpeur comprend un circuit d'évaluation (19) qui est conçu pour lire et vérifier l'information d'identification numérique provenant de la puce (24) du palpeur, dans lequel les contre-paliers sont fabriqués à partir d'un matériau conducteur et le circuit d'évaluation est relié de manière conductrice à au moins un premier et un deuxième contre-palier.

7. Elément de fixation interchangeable de palpeur selon la revendication 6, dans lequel un premier contre-palier (14a, 15a) de l'élément de fixation interchangeable de palpeur est constitué de deux composants séparés et électriquement isolés l'un de l'autre (14a, 15a) et l'un desdits composants (15a) est relié de manière conductrice ou par l'intermédiaire d'une résistance (44) à un troisième contre-palier (14b, 15b), et l'autre desdits composants (14a) est relié de manière conductrice au circuit d'évaluation (19) de manière à ce que, lors d'un contact d'un palier électriquement conducteur (16a) associé d'un palpeur avec les deux composants isolés l'un de l'autre (14a, 15a) du premier contre-palier, un pontage électrique puisse s'établir et de ce fait, une liaison conductrice s'établisse entre le troisième contre-palier et le circuit d'évaluation.

8. Elément de fixation interchangeable de palpeur selon la revendication 7, dans lequel le deuxième et/ou le troisième contre-palier (14b, 15b ; 14c, 15c) de l'élément de fixation interchangeable de palpeur est/sont également constitué(s) de deux composants séparés et électriquement isolés l'un de l'autre, et dans lequel
- ledit composant électriquement isolé du troisième contre-palier (14b, 15b) est relié de manière conductrice ou par l'intermédiaire d'une résistance (44) à un composant électriquement isolé (15a) du premier contre-palier (14a, 15a), et l'autre composant électriquement isolé (15b) du troisième contre-palier (14b, 15b) est relié de manière conductrice par l'intermédiaire d'une résistance (40) au deuxième contre-palier, et/ou
- ledit composant électriquement isolé (15c) du deuxième contre-palier (14c, 15c) est relié de manière conductrice au circuit d'évaluation (19) et l'autre composant électriquement isolé (14c) du deuxième contre-palier (14c, 15c) est relié de manière conductrice par l'intermédiaire d'une résistance (40) au troisième contre-palier,
de manière à ce que, lors d'un contact des paliers électriquement conducteurs (16a, 16b, 16c) associés du palier avec les deux composants respectivement isolés l'un de l'autre du premier contre-palier (14a, 15a) et du deuxième contre-palier (14c, 15c) et/ou du troisième contre-palier (14b, 15b), des pontages électriques s'établissent et par conséquent, à ce que deux trajets de courant parallèles puissent s'établir ainsi entre les premier et deuxième contre-paliers, dans lequel la puce (24) se trouve sur le premier trajet de courant et la résistance (40) se trouve sur le deuxième trajet de courant.

9. Elément de fixation interchangeable de palpeur (43) selon les revendications 6 à 8, dans lequel le circuit d'évaluation (19) est en outre configuré de manière à vérifier la mise en place correcte du palpeur, dans lequel, à cet effet, le circuit d'évaluation :
- vérifie si l'information d'identification peut être lue à partir de la puce et/ou
- mesure au moins une grandeur électrique telle que le courant et la tension, et vérifie si ladite grandeur mesurée concorde avec une valeur théorique.

10. Elément de fixation interchangeable de palpeur selon les revendications 6 à 9, dans lequel les deux composants séparés et électriquement isolés l'un de l'autre d'un contre-palier sont respectivement des billes.

11. Elément de fixation interchangeable de palpeur selon les revendications 6 à 10, comportant un dispositif de serrage (17) qui peut coopérer dans le palpeur avec un adaptateur de serrage (18) afin de serrer le palpeur contre l'élément de fixation interchangeable de palpeur.

12. Tête de palpeur d'un appareil de mesure de coordonnées, dans lequel la tête de palpeur comprend un palpeur selon l'une quelconque des revendications 1, 4 ou 5 et un élément de fixation interchangeable de palpeur selon l'une quelconque des revendications 6 à 11.

13. Tête de palpeur d'un appareil de mesure de coordonnées, dans lequel la tête de palpeur comprend un palpeur selon l'une quelconque des revendications 1 à 5 et un élément de fixation interchangeable de palpeur selon l'une quelconque des revendications 6, 9, 10 ou 11.
